# EUROPÄISCHE PATENTANMELDUNG

(11) **EP 2 154 506 A1**
(43) Veröffentlichungstag der Anmeldung: **17.02.2010**
(21) Anmeldenummer: 08014081.7
(22) Anmeldetag: 06.08.2008
(51) Int. Cl.: G01M 15/08, F02D 35/02

(54) **Selektive Filterung eines Messsignals eines Kraftfahrzeug-Sensors**

(71) Anmelder: Continental Automotive GmbH, 30165 Hannover (DE); Continental Automotive France, 31100 Toulouse (FR)
(72) Erfinder: Bauer, Erwin, 93138 Lappersdorf (DE); Ellmer, Dietmar, 93059 Regensburg (DE); Haag, Jan, 74401 Frenstát (CZ); L'Hénoret, Benjamin, 31000 Toulouse (FR)

(57) **Zusammenfassung**

Es wird ein Verfahren zum selektiven Filtern eines Messsignals (111) eines Sensors (110) eines Kraftfahrzeugs beschrieben, wobei dem Messsignal (111) ein Störsignal von einer Störquelle überlagert ist, das mit einem zeitlichen Verlauf des Messsignals (111) korreliert ist und das lediglich innerhalb eines begrenzten Zeitintervalls auftritt. Das Verfahren weist auf (a) ein Aktivieren einer Filterschaltung (127) zu einem Einschaltzeitpunkt, welcher vor dem Beginn des begrenzten Zeitintervalls liegt oder mit dem Beginn des begrenzten Zeitintervalls zusammenfällt, (b) ein Reduzieren der Störung des Messsignals (111) mittels der aktivierten Filterschaltung, und (c) ein Deaktivieren der Filterschaltung (127) zu einem Ausschaltzeitpunkt, welcher mit dem Ende des begrenzten Zeitintervalls zusammenfällt oder nach dem Ende des begrenzten Zeitintervalls liegt. Ferner wird eine entsprechende Vorrichtung (120) zum selektiven Filtern eines Messsignals (111) eines Kraftfahrzeug-Sensors (110) beschrieben. Außerdem wird ein Sensorsystem (100) mit einer oben genannten Vorrichtung (120) zum selektiven Filtern eines Messsignals (111) sowie ein Computerprogramm zum Durchführen des oben genannten Verfahrens zum selektiven Filtern eines Messsignals (111) eines Kraftfahrzeug-Sensors beschrieben.

## Beschreibung

Die vorliegende Erfindung betrifft das technische Gebiet der Filterung eines Messsignals, welches von einem KraftfahrzeugSensor bereitgestellt wird und für eine Messgröße in einem Kraftfahrzeug indikativ ist. Die vorliegende Erfindung betrifft insbesondere ein Verfahren zum selektiven Filtern eines Messsignals eines Kraftfahrzeug-Sensors, wobei dem Messsignal ein Störsignal von einer Störquelle überlagert ist, das mit einem zeitlichen Verlauf des Messsignals korreliert ist und das lediglich innerhalb eines begrenzten Zeitintervalls auftritt. Die vorliegende Erfindung betrifft ferner eine entsprechende Vorrichtung zum selektiven Filtern eines Messsignals eines Kraftfahrzeug-Sensors. Außerdem betrifft die vorliegende Erfindung ein Sensorsystem mit einer oben genannten Vorrichtung zum selektiven Filtern eines Messsignals sowie ein Computerprogramm zum Durchführen des oben genannten Verfahrens zum selektiven Filtern eines Messsignals eines Kraftfahrzeug-Sensors.

In der Motorenentwicklung - sowohl für Otto- als auch für Dieselmotoren - ist es ein stetiges Bestreben, den Verbrennungsprozess zu optimieren. Dies gilt sowohl hinsichtlich der Motoreffizienz als auch hinsichtlich der Reduzierung des Schadstoffausstoßes. Nur mit einer optimalen Verbrennungskontrolle können beispielsweise die strengen EU5 und EU6 Emissionsgrenzwerte eingehalten sowie der CO2 Ausstoß reduziert werden.

Ein wichtiger Ansatz zur Optimierung des Verbrennungsprozesses ist das sog. CAI (Controlled Auto Ignition) - Brennverfahren, welches sich derzeit in der Entwicklung befindet. Dabei handelt es sich um ein homogenes mageres Kompressionszündverfahren, das aufgrund seiner Sensibilität erst durch den Einsatz von Sensoren, die den Zylinderdruck messen, sicher beherrscht werden kann. Das Messsignal eines Zylinderdruck-Sensors dient dabei beispielsweise zur Ermittlung charakteristischer Verbrennungsprozessgrößen wie dem indizierten Mitteldruck (Pore) und/oder dem sog. Verbrennungsschwerpunkt (MBR50).

Ein generelles Problem bei der Messung bzw. der Indizierung des Zylinderdrucks sind externe Störgrößen, die das von dem Zylinderdruck-Sensor bereitgestellte Messsignal negativ beeinflussen und/oder bereits die eigentliche Druckmessung verfälschen können. Als Folge der von einer oder von mehreren Störgrößen generierten Störungen wird das Messsignal verfälscht.

Die beiden signifikantesten Störquellen bei der Ermittlung des Zylinderdrucks sind (a) Körperschallschwingungen des betreffenden Zylinders und (b) das Zündsystem.
(a) Körperschallschwingungen entstehen vornehmlich beim Schließen der Ladungswechselventile durch ein hartes Auftreffen auf ihren Ventilsitz. Körperschallschwingungen treten abhängig von der Motorkonstruktion und dem verwendeten Werkstoff wie beispielsweise Grauguss oder Aluminium im Frequenzbereich von etwa 5kHz bis etwa 15kHz auf.
(b) Das Zündsystem, dessen Zündspule und Zündkerze üblicherweise in unmittelbarer Nähe des Zylinderdruck-Sensors angeordnet sind, setzt bei der Zündung Hochspannungsimpulses von 15kV bis 35kV ab. Diese Hochspannungsimpulse können infolge einer praktisch nicht zu vermeidbaren elektromagnetischen Kopplung mit einer Signalleitung des Zylinderdruck-Sensors ebenfalls das Messsignal des Zylinderdruck-Sensors stören.

Es ist bekannt, die von Körperschallschwingungen und von dem Zündsystem bewirkten Störsignale durch den Einsatz von geeigneten Filterschaltungen abzuschwächen und im Idealfall sogar vollständig zu eliminieren. Die Filterschaltungen sind vornehmlich Tiefpassfilter.

Der vorliegenden Erfindung liegt die Aufgabe zugrunde, die Filterung eines Messsignals von einem Sensor eines Kraftfahrzeugs dahingehend zu verbessern, dass Störsignale effektiv und mit minimalem Aufwand reduziert oder sogar eliminiert werden.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

1#Gemäß einem ersten Aspekt der Erfindung wird ein Verfahren zum selektiven Filtern eines Messsignals eines Sensors eines Kraftfahrzeugs beschrieben, wobei dem Messsignal ein Störsignal von einer Störquelle überlagert ist, das mit einem zeitlichen Verlauf des Messsignals korreliert ist und das lediglich innerhalb eines begrenzten Zeitintervalls auftritt. Das beschriebene Verfahren weist auf (a) ein Aktivieren einer Filterschaltung zu einem Einschaltzeitpunkt, welcher vor dem Beginn des begrenzten Zeitintervalls liegt oder mit dem Beginn des begrenzten Zeitintervalls zusammenfällt, (b) ein Reduzieren der Störung des Messsignals mittels der aktivierten Filterschaltung, und (c) ein Deaktivieren der Filterschaltung zu einem Ausschaltzeitpunkt, welcher mit dem Ende des begrenzten Zeitintervalls zusammenfällt oder nach dem Ende des begrenzten Zeitintervalls liegt.

Dem beschriebenen selektiven Filterungsverfahren liegt die Erkenntnis zugrunde, dass eine für eine bestimmte Störquelle spezifische Filterschaltung lediglich dann aktiviert werden muss, wenn mit dem Auftreten einer von dieser Störquelle verursachten Störung zu rechnen ist. Außerhalb des begrenzten Zeitintervalls des Auftretens der Störung ist die Filterschaltung deaktiviert, so dass das Messsignal des Sensors unverfälscht ausgewertet werden kann. In diesem Zusammenhang wird darauf hingewiesen, dass jede Filterung, die auf ein Messsignal angewendet wird, zumindest einen gewissen manipulierenden Einfluss auf das Messsignal hat.

Erfindungsgemäß wird somit die Filterschaltung spätestens dann aktiviert, wenn das Störsignal in signifikanter Weise auftritt. In entsprechender Weise wird die Filterschaltung frühestens dann deaktiviert, wenn die Störung wieder abgeklungen ist. Dies bedeutet, dass der Einschaltzeitpunkt und der Ausschaltzeitpunkt so gewählt werden, dass die durch diese beiden Zeitpunkte definierte Zeitspanne zumindest so lang ist, dass das Zeitintervall der Störung zumindest annähernd in der definierten Zeitspanne enthalten ist.

Unter dem Begriff "Reduzieren" wird im Rahmen dieser Anmeldung jede Art der Abschwächung der Störung verstanden. Insbesondere ist unter dem Begriff "Reduzieren" auch eine zumindest annähernd vollständige Eliminierung des Störsignals zu verstehen.

Der Verlauf der von dem Sensor erfassten Messgröße kann dabei grundsätzlich bekannt sein. Dasselbe kann für den Verlauf des Störsignals gelten, welcher Verlauf für eine bestimmte Störquelle indikativ ist. Demzufolge kann beispielsweise anhand des Verlaufs eines charakteristischen Störsignals eine Störquelle identifiziert werden. Die Zuordnung zwischen Störsignal und Störquelle kann jedoch auch anhand eines charakteristischen Frequenzspektrums des Störsignals erfolgen.

Das Störsignal kann auf beliebige Weise auf das Messsignal einwirken. So kann das Störsignal beispielsweise durch eine elektromagnetische Wechselwirkung auf das von dem Kraftfahrzeugsensor bereitgestellte Messsignal einwirken. In diesem Fall wird der eigentliche Messprozess des Sensors von der genannten Störquelle nicht oder zumindest nicht wesentlich gestört. Dies ist insbesondere dann relevant, wenn die Störquelle beispielsweise infolge von starken Spannungsänderungen und/oder starken Stromänderungen elektromagnetische Wellen aussendet. Das Störsignal kann jedoch auch direkt auf den eigentlichen Messprozess des Kraftfahrzeugsensors einwirken. In diesem Fall liefert der Sensor bereits ein gestörtes Messsignal.

2#Gemäß einem weiteren Ausführungsbeispiel der Erfindung wird der Einschaltzeitpunkt und/oder der Ausschaltzeitpunkt abhängig von einem zeitlichen Verlauf des Messsignals gewählt.

Die beschriebene Wahl des Schaltzeitpunkts oder der Schaltzeitpunkte in Abhängigkeit von einem zeitlichen Verlauf des Messsignals kann insbesondere dann zu einer genauen Festlegung des Einschaltzeitpunkts und/oder des Ausschaltzeitpunkts genutzt werden, wenn der grundsätzliche Verlauf des zu erwarteten Messsignals bekannt ist. Dabei kann der grundsätzliche Verlauf des Messsignals beispielsweise durch eine virtuelle Stauchung oder eine virtuelle Dehnung in den tatsächlichen Verlauf des Messsignals zumindest annähernd überführt werden. Dies kann für eine Stauchung oder Dehnung (a) entlang der Zeitachse, welche üblicherweise auf der Abszisse eines Koordinatensystems dargestellt ist, und/oder (b) entlang einer Messwertachse, welche üblicherweise auf der Ordinate eines Koordinatensystems dargestellt ist. Dies bedeutet, dass sich der tatsächliche Verlauf und der grundsätzliche Verlauf durch beliebige Skalierungen entlang verschiedener Richtungen unterscheiden können. Dabei kann der jeweilige Skalierungsfaktor ein linearer oder ein nicht linearer Skalierungsfaktor, beispielsweise ein logarithmischer Skalierungsfaktor sein.

3#Gemäß einem weiteren Ausführungsbeispiel der Erfindung ist der Einschaltzeitpunkt und/oder der Ausschaltzeitpunkt abhängig ist von der Höhe des Messsignals. Damit kann die Aktivierung und/oder die Deaktivierung der Filterschaltung von dem Messsignal bzw. der Sensorerfassungsgröße abhängen und die Sensorerfassungsgröße kann ein Triggersignal für die Aktivierung und/oder die Deaktivierung der Filterschaltung darstellen. Damit schaltet der das Messsignal bereitstellende Kraftfahrzeugsensor quasi selbst die Filterschaltung ein und/oder aus.

Auf diese Weise kann ein selbstständig autark arbeitendes Sensorsystem realisiert werden, dass auf Basis seines eigenen Messwerts einen optimal an bestimmte Störgrößen angepassten Filter aktiviert und dadurch die betreffende Störgröße weitgehend reduziert oder sogar eliminiert. Dies kann die Grundlage für ein einwandfreies Sensorsignal und einer effektiven Informationsnutzung in der Motorsteuerung eines Kraftfahrzeugs darstellen.

Es wird ausdrücklich darauf hingewiesen, dass die hier beschriebenen von der Höhe des Messsignals abhängige Aktivierung der Filterschaltung und die weiter oben beschriebene von einem zeitlichen Verlauf des Messsignals abhängige Aktivierung der Filterschaltung auch miteinander kombiniert werden können. Dies bedeutet, dass voneinander unabhängige und damit redundante Information verwendet werden können, um sowohl in einem zeitlich relevanten Ereignisfenster als auch in einem hinsichtlich des Messwertes relevanten Ereignisfenster die Filterschaltung aktiviert wird.

4#Gemäß einem weiteren Ausführungsbeispiel der Erfindung ist das Störsignal ein systematisches Störsignal. In diesem Zusammenhang ist unter einem systematischen Störsignal ein Störsignal zu verstehen, welches zu dem zeitlichen Verlauf und/oder zu dem Messwertverlauf des Messsignals eine feste Korrelation aufweist. Damit unterscheidet sich eine systematische Störung in signifikanter Weise von einer zufälligen Störung, welche im Gegensatz zu einer systematischen Störung in Bezug zu der von dem Sensor zu erfassenden Messgröße beispielsweise im Bereich eines Motors eines Kraftfahrzeugs nicht in einem zeitlich begrenzten Ereignisfenster und/oder bei bestimmten Messwerten auftritt.

5#Gemäß einem weiteren Ausführungsbeispiel der Erfindung weist das Messsignal und/oder das Störsignal einen zeitlich zyklischen Verlauf auf. Dies bedeutet, dass das Messsignal und/oder das Störsignal einen Verlauf aufweist, bei dem ein charakteristisches Verhalten öfters wiederkehrt bzw. gleichartige, ähnliche oder vergleichbare Signaturen in dem Verlauf des Messsignals und/oder des Störsignals immer wieder auftreten. Dabei ist es nicht zwingend erforderlich, dass diese vergleichbaren Signaturen in regelmäßigen bzw. periodischen zeitlichen Abständen wiederkehren. So kann beispielsweise der zeitliche Abstand, mit dem eine charakteristische Signatur innerhalb eines Messsignals von einem Kraftfahrzeugsensor und/oder innerhalb eines Störsignals für einen Kraftfahrzeugsensor von der aktuellen Fahrgeschwindigkeit oder von der aktuellen Motordrehzahl abhängen.

Es wird darauf hingewiesen, dass ein Störsignal auch innerhalb eines Zyklus des Messsignals mehrfach auftreten kann oder dass ein Störsignal nur bei jedem n-ten Messsignalzyklus auftreten kann. Dabei kann n jede beliebige natürliche Zahl sein.

6#Gemäß einem weiteren Ausführungsbeispiel der Erfindung ist das Messsignal ein analoges Messsignal.

Ein analoges Messsignal kann insbesondere mit an sich bekannten Filterschaltungen wie beispielsweise einem RC Filter oder einer Kombination aus mehreren RC Filtern gefiltert werden. Dabei können durch die Wahl eines Widerstandes R und/oder einer Kapazität C geeignete Grenzfrequenzen festgelegt werden, oberhalb und/oder unterhalb derer eine Signalabschwächung bzw. Filterung auftritt. Selbstverständlich kann durch die Kombination von mehreren Filtern auch ein Bandpassfilter realisiert werden, welcher innerhalb oder außerhalb eines bestimmten Frequenzbereiches Signale abschwächt oder passieren lässt.

Es wird darauf hingewiesen, dass das Messsignal jedoch auch ein digitales Messsignal sein kann, welches von einem Analogen und/oder einem digitalen Störsignal gestört wird. In diesem Fall können geeignete digitale Filterschaltungen verwendet werden, auf die im Rahmen dieser Anmeldung aber nicht weiter eingegangen werden soll.

7#Gemäß einem weiteren Ausführungsbeispiel der Erfindung ist dem Messsignal zumindest ein weiteres Störsignal von einer weiteren Störquelle überlagert, das mit dem zeitlichen Verlauf des Messsignals korreliert ist und innerhalb eines weiteren Zeitintervalls auftritt. Das Verfahren weist ferner auf (a) ein Aktivieren einer weiteren Filterschaltung zu einem weiteren Einschaltzeitpunkt, welcher vor dem Beginn des weiteren Zeitintervalls liegt oder mit dem Beginn des weiteren Zeitintervalls zusammenfällt, (b) ein Reduzieren der Störung des Messsignals mittels der aktivierten weiteren Filterschaltung, und (c) ein Deaktivieren der weiteren Filterschaltung zu einem weiteren Ausschaltzeitpunkt, welcher mit dem Ende des weiteren Zeitintervalls zusammenfällt oder nach dem Ende des weiteren Zeitintervalls liegt.

Das von der weiteren Störquelle verursachte weitere Störsignal kann im Vergleich zu dem Störsignal der Störquelle zur gleichen Zeit oder zu einer unterschiedlichen Zeit auftreten. Auch kann das weitere Störsignal innerhalb desselben oder innerhalb eines unterschiedlichen Frequenzbereiches auftreten wie das Störsignal.

Bevorzugt ist jedoch jeder Störquelle bzw. jedem Störsignal jeweils eine Filterschaltung zugeordnet, die zu einer Eliminierung oder zumindest zu einer Reduzierung des entsprechenden Störsignals geeignet ist. Die Zuordnung kann insbesondere bei Störsignalen mit unterschiedlichen Frequenzen durch eine geeignete Frequenzanpassung der verschiedenen Filterschaltungen hergestellt werden. Auch können unterschiedlich parametrierte Filterschaltungen zur optimalen Reduzierung der unterschiedlichen Störsignale herangezogen werden.

Bevorzugt treten unterschiedliche Störsignale zu unterschiedlichen Zeitpunkten und/oder bei unterschiedlichen Werten des Messsignals auf. Dadurch können die unterschiedlichen Filterschaltungen zu unterschiedlichen Zeiten und/oder bei unterschiedlichen Werten des Messsignals aktiviert werden.

Verschiedene Phasen des Verlaufs des Messsignals, in denen jeweils unterschiedliche Filterschaltungen aktiviert werden müssen, können beispielsweise jeweils durch einen bestimmten Schwellwert des Messsignals voneinander separiert werden. Im Falle eines Drucksensors, der beispielsweise zum Messen eines Zylinderdrucks verwendet werden kann, können die bekannte Hochdruckphase und die bekannte Niederdruckphase innerhalb eines 4-Takt Motorenzyklus auf einfache und zuverlässige Weise voneinander separiert werden.

Es wird darauf hingewiesen, dass die Erfindung auch bei mehr als zwei unterschiedlichen Störsignalen, die dem Messsignal überlagert sind, realisiert werden kann. Hinsichtlich der Anzahl an Filterschaltungen, die jeweils zumindest einer Störquelle zugeordnet sein können, gibt es keine prinzipielle Obergrenze.

8#Gemäß einem weiteren Ausführungsbeispiel der Erfindung ist der Sensor ein Drucksensor, welcher insbesondere zum Messen eines Zylinderdrucks eines Motors eines Kraftfahrzeugs verwendet wird.

Der Zylinderdruck innerhalb eines Zweitaktmotors oder eines Viertaktmotors (Benzin- oder Dieselmotor) stellt eine zyklische Messgröße dar, die eine von der Motordrehzahl abhängige Periodizität aufweist. Der Sensor kann somit ein bekannter Zylinderdrucksensor sein, dessen Messsignal durch das beschriebene selektive Filterungsverfahren auf effektive Weise von Störungen befreit werden kann.

9#Gemäß einem weiteren Ausführungsbeispiel der Erfindung ist die Störquelle ein Zündsystem für einen Zylinder eines Motors eines Kraftfahrzeugs.

Das Zündsystem stellt eine Störquelle dar, die über eine elektromagnetische Wechselwirkung Störsignale in das von dem Sensor bereit gestellte Messsignal einkoppelt. Da der Zündzeitpunkt üblicherweise in bekannter Weise mit einem Kurbelwellenwinkel und/oder mit dem Zylinderdruck korreliert ist, kann eine Filterschaltung, welche die von dem Zündsystem verursachten Störsignale eliminiert, in einfacher Weise in einem bestimmten Kurbelwinkelbereich aktiviert werden. Selbstverständlich kann die Filterschaltung auch, wie oben bereits beschrieben, durch bestimmte Sensor-Messwerte für den Zylinderdruck aktiviert werden.

Selbstverständlich kann das Zündsystem ferner nicht nur die Störquelle sondern auch die oben beschrieben weitere Störquelle sein.

10#Gemäß einem weiteren Ausführungsbeispiel der Erfindung ist die Störquelle ein Ladungswechselventil, welches durch eine abrupte Bewegungsänderung einen Messvorgang des Sensors beeinflusst. So können insbesondere beim Schließen des Ladungswechselventils in dem betreffenden Motorblock oder dem betreffenden Teil des Motorblocks Körperschallschwingungen erzeugt werden, die direkt in mechanischer Weise die Messung des Sensors, insbesondere des Drucksensors, negativ beeinflussen können.

Es wird darauf hingewiesen, dass die Körperschallschwingungen auch von verschiedenen Ladungswechselventilen, insbesondere von einem Einlassventil und einem Auslassventil, erzeugt werden können. Dies bedeutet, dass die innerhalb eines kompletten Zyklus eines Viertaktmotors, d.h. innerhalb einer Änderung des Kurbelwellenwinkels um 720° einmal Körperschallschwingungen von dem Einlassventil und einmal Körperschallschwingungen von dem Auslassventil erzeugt werden.

Das beschriebene selektive Filterverfahren kann im Falle der Reduzierung von Störsignalen eines Zylinderdruck-Messsignals, die sowohl von dem Zündsystem als auch von zumindest einem Ladungswechselventil erzeugt werden, folgendermaßen ablaufen: Zunächst werden als Hauptstörquellen die Körperschallschwingungen aufgrund des Schließens der Ladungs- bzw. Gaswechselventile und die elektrischen Störimpulse aufgrund der Zündung identifiziert. Die entsprechenden Störsignale auf dem Messsignal werden erfasst und geeignet parametrierte Filterschaltungen ermittelt. Zur Eliminierung von Körperschallschwingungen, die in der sog. Niederdruckphase der Arbeitstakte des Motors auftreten, wird eine erste Filterschaltung aktiviert. Zur Eliminierung der Zündstörimpulse, die in der sog. Hochdruckphase der Arbeitstakte des Motors auftreten, wird eine zweite Filterschaltung aktiviert. Die beiden Arbeitstakt-Phasen werden durch einen definierten Druckschwellwert von einander separiert. Dabei kann der entsprechende Druckschwellwert vom dem Sensor bzw. dem Zylinderdrucksensor selbst erkannt bzw. gemessen werden. Für einen Plausibilitätscheck kann beispielsweise auch ein bestimmtes Zeitfenster für den Wechsel von der Niederdruck-Phase zur Hochdruckphase und umgekehrt berücksichtigt werden. Außerdem können über die Hochdruck- und die Niederdruckphase hinaus weitere Druckbereiche definiert werden und jedem Druckbereich ein bereichsspezifisches Störsignal eine geeignete Filterschaltung zugeordnet werden.

11#Gemäß einem weiteren Aspekt der Erfindung wird eine Vorrichtung zum selektiven Filtern eines Messsignals eines Sensors eines Kraftfahrzeugs beschrieben, wobei dem Messsignal ein Störsignal von einer Störquelle überlagert ist, das mit einem zeitlichen Verlauf des Messsignals korreliert ist und das lediglich innerhalb eines begrenzten Zeitintervalls auftritt. Die beschriebene Vorrichtung, welche in Form eines Steuergerätes realisiert werden kann, weist auf (a) eine Filterschaltung zum Reduzieren der Störung des Messsignals und (b) eine Filterauswahleinrichtung. Die Filterauswahleinrichtung ist eingerichtet (b1) zum Aktivieren der Filterschaltung zu einem Einschaltzeitpunkt, welcher vor dem Beginn des begrenzten Zeitintervalls liegt oder mit dem Beginn des begrenzten Zeitintervalls zusammenfällt, und (b2) zum Deaktivieren der Filterschaltung zu einem Ausschaltzeitpunkt, welcher mit dem Ende des begrenzten Zeitintervalls zusammenfällt oder nach dem Ende des begrenzten Zeitintervalls liegt.

Auch der beschriebenen Vorrichtung liegt die Erkenntnis zugrunde, dass eine für eine bestimmte Störquelle spezifische Filterschaltung lediglich dann aktiviert werden muss, wenn mit dem Auftreten einer von dieser Störquelle verursachten Störung zu rechnen ist. Außerhalb des begrenzten Zeitintervalls des Auftretens der Störung ist die Filterschaltung deaktiviert, so dass das Messsignal des Sensors möglichst unverfälscht ausgewertet werden kann.

12#Gemäß einem Ausführungsbeispiel der Erfindung weist die Vorrichtung zusätzlich auf (a) eine weitere Filterschaltung zum Reduzieren einer weiteren Störung des Messsignals, wobei die weitere Störung von einer weiteren Störquelle verursacht ist, mit dem zeitlichen Verlauf des Messsignals korreliert ist und innerhalb eines weiteren Zeitintervalls auftritt, und (b) eine weitere Filterauswahleinrichtung. Die weitere Filterschaltung ist eingerichtet (b1) zum Aktivieren der weiteren Filterschaltung zu einem weiteren Einschaltzeitpunkt, welcher vor dem Beginn des weiteren Zeitintervalls liegt oder mit dem Beginn des weiteren Zeitintervalls zusammenfällt, und (b2) zum Deaktivieren der weiteren Filterschaltung zu einem weiteren Ausschaltzeitpunkt, welcher mit dem Ende des weiteren Zeitintervalls zusammenfällt oder nach dem Ende des weiteren Zeitintervalls liegt.

Die Filterauswahlschaltung und die weitere Filterauswahlschaltung können auch mittels einer gemeinsamen Filterauswahlschaltung realisiert sein.

Es wird darauf hingewiesen, dass die selektive Filtervorrichtung auch für mehr als zwei unterschiedliche Störsignale, die dem Messsignal in korrelierter Weise überlagert sind, realisiert werden kann.

13#Gemäß einem weiteren Aspekt der Erfindung wird ein Sensorsystem für ein Kraftfahrzeug und insbesondere für den Motor eines Kraftfahrzeugs beschrieben. Das Sensorsystem weist auf (a) einen Sensor zum Erfassen einer Messgröße, und (b) eine Vorrichtung des oben beschriebenen Typs, welche Vorrichtung dem Sensor nachgeschaltet ist.

Dem beschriebenen Sensorsystem liegt die Erkenntnis zugrunde, dass durch eine geeignete Kombination eines Kraftfahrzeug-Sensors, insbesondere eines Zylinderdrucksensors, mit der oben beschriebenen Filtervorrichtung ein selbständig und autark arbeitendes Sensorsystem geschaffen werden kann. Das Sensorsystem kann durch eine zeitabhängige Aktivierung von zumindest einer geeigneten Filterschaltung auf effektive Weise Störgrößen eliminieren. Auf diese Weise können in einer Motorsteuerung hochgenaue Informationen über den Betriebszustand des Motors bereit gestellt und damit auch optimal genutzt werden.

14#Gemäß einem Ausführungsbeispiel der Erfindung bilden der Sensor und die Vorrichtung eine bauliche Einheit. Dies kann beispielsweise dadurch realisiert werden, dass die zumindest eine Filterschaltung und die zumindest eine Filterauswahlschaltung in die Sensorelektronik integriert werden. Auf diese Weis kann das Sensorsystem in einer besonders kompakten Bauweise realisiert werden, so dass es bei einer Vielzahl von unterschiedlichen Anwendungen eingesetzt werden kann.

15#Gemäß einem weiteren Aspekt der Erfindung wird ein Computerprogramm zum selektiven Filtern eines Messsignals eines Sensors eines Kraftfahrzeugs beschrieben, wobei dem Messsignal ein Störsignal von einer Störquelle überlagert ist, das mit einem zeitlichen Verlauf des Messsignals korreliert ist und das lediglich innerhalb eines begrenzten Zeitintervalls auftritt. Das Computerprogramm ist, wenn es von einem Prozessor ausgeführt wird, zum Durchführen des oben beschriebenen Verfahrens zum selektiven Filtern eines Messsignals eines Sensors eines Kraftfahrzeugs eingerichtet.

Das Computerprogramm kann als computerlesbarer Anweisungscode in jeder geeigneten Programmiersprache wie beispielsweise in JAVA, C++ etc. implementiert sein. Das Computerprogramm kann auf einem computerlesbaren Speichermedium (CD-Rom, DVD, Wechsellaufwerk, flüchtiger oder nicht-flüchtiger Speicher, eingebauter Speicher/Prozessor etc.) abgespeichert sein. Der Anweisungscode kann einen Computer oder andere programmierbare Geräte wie insbesondere ein Steuergerät für einen Motor eines Kraftfahrzeugs derart programmieren, dass die gewünschten Funktionen ausgeführt werden. Ferner kann das Computerprogramm in einem Netzwerk wie beispielsweise dem Internet bereitgestellt werden, von dem es bei Bedarf von einem Nutzer herunter geladen werden kann.

Im Sinne der vorliegenden Anmeldung ist die Erwähnung eines solchen Computerprogramm gleichbedeutend mit der Erwähnung eines Programmelements, eines Computerprogrammprodukts und/oder eines computerlesbaren Mediums, das Anweisungen zum Steuern eines Computersystems enthält, um die Arbeitsweise eines Systems bzw. eines Verfahrens in geeigneter Weise zu koordinieren, um die mit dem erfindungsgemäßen Verfahren verknüpften Wirkungen zu erreichen.

Die Erfindung kann sowohl mittels eines Computerprogramms, d.h. einer Software, als auch mittels einer oder mehrerer spezieller elektrischer Schaltungen, d.h. in Hardware oder in beliebig hybrider Form, d.h. mittels Software-Komponenten und Hardware-Komponenten, realisiert werden.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Verfahrensansprüchen und andere Ausführungsformen der Erfindung mit Vorrichtungsansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Kategorien oder Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.

Figur 1 zeigt ein Sensorsystem mit einem an einem Zylinder angebrachten Druckssensor zur selektiven Filterung des von dem Drucksensor bereit gestellten Messsignals.

Figur 2 zeigt ein Diagramm, in dem ein von Störungen überlagertes Zylinderdruck-Messsignal als Funktion des Kurbelwellenwinkels dargestellt ist.

An dieser Stelle wird darauf hingewiesen, dass sich in der Zeichnung die Bezugszeichen von gleichen oder von einander entsprechenden Komponenten lediglich in ihrer ersten Ziffer und/oder durch einen angehängten Buchstaben voneinander unterscheiden.

Ferner wird darauf hingewiesen, dass die nachfolgend beschriebene Ausführungsform lediglich eine beschränkte Auswahl an möglichen Ausführungsvarianten der Erfindung darstellt.

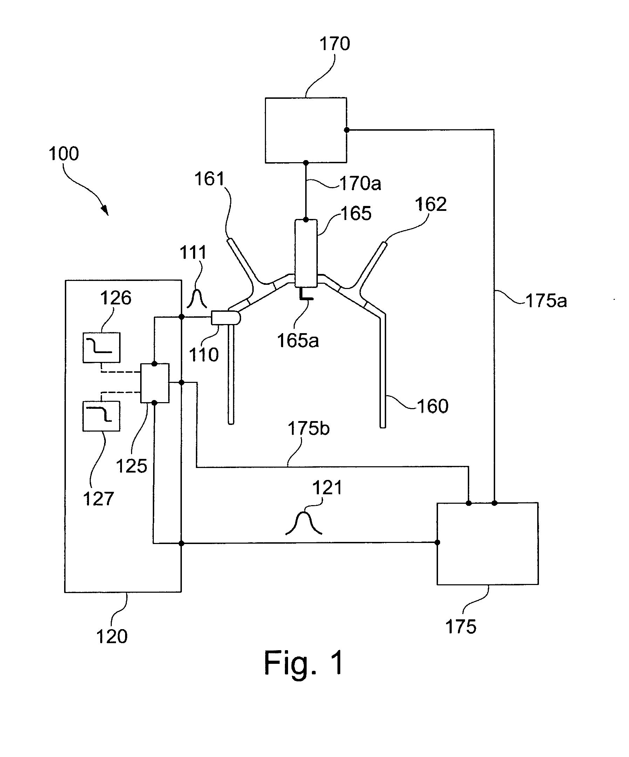

Figur 1 zeigt ein Sensorsystem 100, welches zur Ausführung des in dieser Anmeldung beschriebenen Verfahrens zur selektiven Filterung eines von einem Sensor 110 bereitgestellten und von einem Störsignal überlagerten Messsignals 111 vorgesehen ist. Gemäß dem hier dargestellten Ausführungsbeispiel ist der Sensor ein Zylinderdrucksensor 110, der an einem Zylinder 160 eines nicht näher dargestellten Motors eines Kraftfahrzeugs angebracht ist.

Der Zylinder 160 weist in bekannter Weise ein Einlassventil 161, ein Auslassventil 162 und eine Zündkerze 165 auf. Die Zündkerze 165 weist eine Zündelektrode 165a auf, welche mit einer Zündspule 170 eines Zündsystems über ein Zündkabel 170a verbunden ist. Das Zündsystem 170 wiederum ist über eine Steuerleitung 175a mit einer Steuereinheit 175 verbunden.

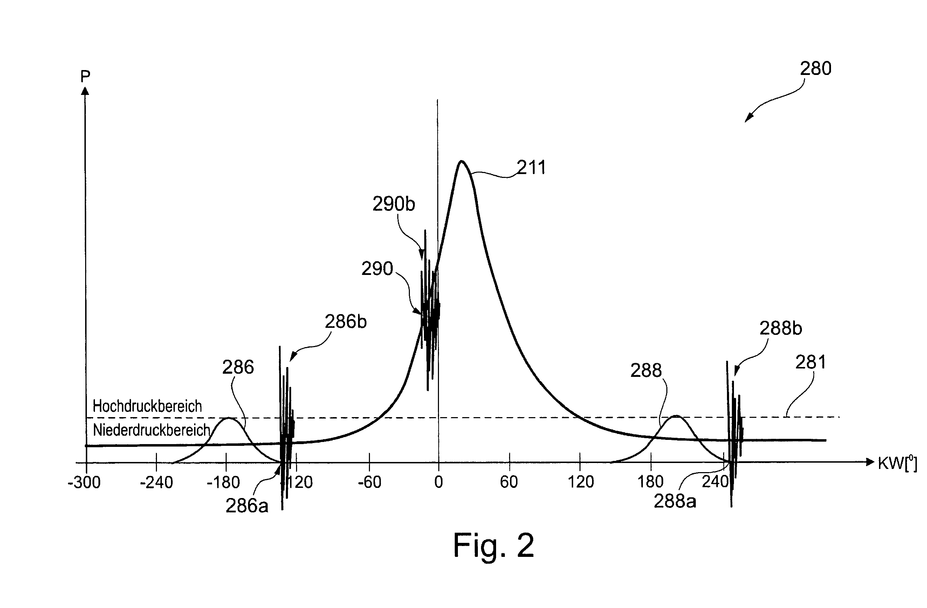

Wie aus Figur 1 ersichtlich, wird ein von dem Zylinderdrucksensor 110 bereit gestelltes Messsignal 111 einer Filtervorrichtung 120 zugeführt. Gemäß dem hier dargestellten Ausführungsbeispiel ist das Messsignal 111 von verschiedenen Störungen überlagert, die, wie nachfolgend anhand von Figur 2 beschrieben wird, von der Zündspule 170 und von Körperschallschwingungen verursacht werden, welche beim Schließen des Einlassventils 161 und/oder des Auslassventils 162 erzeugt werden.

Die Filtervorrichtung 120 weist eine Filterauswahleinrichtung 125 auf, die über eine Steuerleitung 175b mit der Steuereinheit 175 verbunden ist. Die Filterauswahleinrichtung 125 ist erfindungsgemäß derart eingerichtet, dass abhängig von einem Kurbelwellenwinkel des Motors unterschiedliche Filterschaltungen 126 und 127 aktivierbar sind. Gemäß dem hier dargestellten Ausführungsbeispiel ist eine Filterschaltung ein erster Tiefpassfilter 126 und die andere Filterschaltung ist ein zweiter Tiefpassfilter 127.

Gemäß dem hier dargestellten Ausführungsbeispiel führen die von den beiden Lastwechselventilen 161 und 162 verursachten Körperschallschwingungen jeweils zu einem Störsignal, welches in Bezug zu einem Signalverlauf des tatsächlichen Zylinderdrucks eine deutlich höhere Frequenz aufweist. Diese Störsignale können demzufolge durch Aktivierung des ersten Tiefpassfilters 126 sehr gut unterdrückt werden. Der erste Tiefpassfilter 126 unterdrückt Signalanteile im Messsignal 111, die oberhalb einer Grenzfrequenz von ca. 1 kHz liegen. Damit werden die auf den beschriebenen Körperschallschwingungen basierenden Störsignale nahezu vollständig eliminiert, welche abhängig von der jeweiligen Motorenkonstruktion und dem verwendeten Werkstoff wie beispielsweise Grauguss oder Aluminium im Bereich von etwa 5kHz bis 15kHz liegen.

Gemäß dem hier dargestellten Ausführungsbeispiel führen ferner die von dem Zündsystem bereitgestellten Spannungspulse mit einer Hochspannung im Bereich von 15 kV bis 35 kV zu einem weiteren Störsignal, welches sogar in Bezug zu den Körperschallschwingungen eine höhere Frequenz aufweist. Diese Störsignale können demzufolge durch Aktivierung des zweiten Tiefpassfilters 127 unterdrückt werden, welcher Signalanteile im Messsignal 111 unterdrückt, die oberhalb einer Grenzfrequenz von ca. 20 kHz liegen.

Damit werden die von dem Zündsystem verursachten Störsignale nahezu vollständig unterdrückt werden.

Da die Zeitbereiche bzw. die Bereiche der Kurbelwellenwinkel, in denen sowohl die beiden Körperschallschwingungen als auch die von dem Zündsystem verursachten Störsignale auftreten, genau bekannt sind, kann jeweils durch eine geeignete zeitlich begrenzte Aktivierung der jeweils geeigneten Filterschaltung 126, 127 das Messsignal 111 so gefiltert werden, dass von der Filtervorrichtung 120 ein Ausgangssignal 121 bereitgestellt wird, welches den tatsächlichen Verlauf des Zylinderdrucks sehr gut wiedergibt. Dieses Ausgangssignal, welches auch als gefiltertes Messsignal 121 bezeichnet werden kann, wird über eine Signalleitung 120a der Steuereinheit 175 zugeführt. In der Steuereinheit 175 kann das gefilterte Messsignal 121 dann in bekannter Weise für eine optimale Motorsteuerung verwendet werden.

Figur 2 zeigt ein Diagramm 280, in dem ein von Störungen überlagertes Zylinderdruck-Messsignal 211 als Funktion des Kurbelwellenwinkels KW dargestellt ist. Der Zylinderdruck p ist auf der Abszisse des Diagramms 280 dargestellt. Dargestellt ist ein Teil eines Zyklus eines 4-Takt Benzinmotors. Die gestrichelte horizontale Grenzlinie 281 stellt die bekannte Grenze zwischen dem sog. Niederdruckbereich und dem sog. Hochdruckbereich dar.

Mit dem Bezugszeichen 286 ist die Ventilerhebungskurve eines Einlassventils dargestellt. An der mit dem Bezugszeichen 286a bezeichneten Stelle schließt das Einlassventil, indem es relativ hart an seinem Ventilsitz anschlägt und auf diese Weise Körperschallschwingungen erzeugt, die in dem Messsignal 211 zu einem Störsignal 286b führen. In entsprechender Weise ist mit dem Bezugszeichen 288 die Ventilerhebungskurve eines Auslassventils dargestellt. Mit dem Bezugszeichen 288a ist ferner diejenige Stelle bezeichnet, an der das Auslassventil schließt. Auch hier schlägt das Auslassventil relativ hart an seinem Ventilsitz an und erzeugt somit Körperschallschwingungen, die in dem Messsignal 211 zu einem Störsignal 288b führen.

Der Zündzeitpunkt bzw. der Kurbelwellenwinkel KW, an dem die Zündung stattfindet, ist mit dem Bezugszeichen 290 bezeichnet. Das von dem entsprechenden Hochspannungsimpuls erzeugte Störsignal ist mit dem Bezugszeichen 290b bezeichnet.

Wie aus Figur 2 ersichtlich, treten die Störungen aufgrund von Körperschall und aufgrund des Zündimpulses zu deutlich unterschiedlichen Zeiten bzw. unterschiedlichen Kurbelwellenwinkeln auf. Zudem weisen die unterschiedlichen Störungen auch noch einen qualitativ deutlich unterschiedlichen Verlauf auf, der sich insbesondere in einem unterschiedlichen Frequenzspektrum widerspiegelt. Die von den Körperschallschwingungen im Bereich von etwa 5kHz bis 15kHz verursachten Störungen mit derselben Frequenz weisen im Vergleich zu der von dem Zündsystem verursachten Störung eine deutlich niedrigere Frequenz auf. Diesem Umstand kann man bei der in Figur 1 dargestellten Filtervorrichtung 120 dadurch begegnen, dass die Filterschaltungen 126 und 127 bezüglich ihrer Filterparameter wie beispielsweise die sog. RC Zeitkonstanten optimal auf die Eliminierung des jeweiligen Störimpulses abgestimmt sind.

Außerdem wird noch bestimmt, welche Filterschaltung 126, 127 innerhalb welcher Zeitspanne bzw. innerhalb welchen Kurbelwellenwinkels aktiviert sein sollte. Hier kann man sich den in Figur 2 dargestellten Umstand zunutze machen, dass bezogen auf einen Einzelzylinder die Körperschallstörungen in einem anderen Zeitfenster als die Zündimpulsstörungen auftreten. Während das Schließen der Ein- und Auslassventile in der sog. Niederdruckschleife stattfindet erfolgt die Zündung in der sog. Hochdruckschleife. Somit kann auch abhängig vom jeweils gemessenen Zylinderdruckniveau die eine Filterschaltung 126 oder die andere Filterschaltung 127 aktiviert werden. Dies kann bedeuten, dass der Zylinderdrucksensor aufgrund seines eigenen Messwerts selbständig erkennen kann, welche der beiden Filterschaltungen 126, 127 auszuwählen ist.

Es wird darauf hingewiesen, dass es prinzipiell auch möglich ist, nicht nur zwei sondern mehrere Druckbereiche zu definieren und diesen jeweils ein eigenes Filter zuzuordnen. Auf diese Weise kann gezielt auf weitere zyklenartige Störungen wie z.B. thermische Einflüsse (Thermoschock bei Start der Verbrennung) reagiert werden. Es ist vorteilhaft die Filterschaltungen 126 und 127 und die Filterauswahlschaltung 125 direkt in den Sensor 110 bzw. die Sensorelektronik zu integrieren. Auf diese Weise können störempfindliche Leitungen im Bereich des Motorraums vermieden werden.

Es wird ferner darauf hingewiesen, dass die bisherigen Ausführungen im Wesentlichen lediglich die Thematik Zylinderdruckerfassung explizit behandeln. Das beschriebene Verfahren kann aber auch auf andere Problemstellungen im Bereich der Kraftfahrzeugtechnik übertragen werden. Zur Anwendung des beschriebenen Verfahrens müssen lediglich die folgenden Voraussetzungen erfüllt werden:
(a) Es liegt ein zyklisches Analogsignal vor dessen grober Signalverlauf grundsätzlich bekannt ist.
(b) Das zu filternde Messsignal ist einer oder mehreren Störquellen ausgesetzt.
(c) Die Störungen können durch Filterung mittels geeigneter Filterschaltungen eliminiert werden.
(d) Die Störungen sind systematisch und treten in bestimmten zeitlichen Ereignisfenstern auf.
(e) Die Sensorerfassungsgröße liefert Informationen über das zeitliche Auftreten der Störungen.

## Patentansprüche

1. Verfahren zum selektiven Filtern eines Messsignals (111, 211) eines Sensors (110) eines Kraftfahrzeugs, wobei dem Messsignal (111, 211) ein Störsignal (290b) von einer Störquelle überlagert ist, das mit einem zeitlichen Verlauf des Messsignals (111, 211) korreliert ist und das lediglich innerhalb eines begrenzten Zeitintervalls auftritt, das Verfahren aufweisend
• Aktivieren einer Filterschaltung (127) zu einem Einschaltzeitpunkt, welcher vor dem Beginn des begrenzten Zeitintervalls liegt oder mit dem Beginn des begrenzten Zeitintervalls zusammenfällt,
• Reduzieren der Störung (290b) des Messsignals (111, 211) mittels der aktivierten Filterschaltung, und
• Deaktivieren der Filterschaltung (127) zu einem Ausschaltzeitpunkt, welcher mit dem Ende des begrenzten Zeitintervalls zusammenfällt oder nach dem Ende des begrenzten Zeitintervalls liegt.

2. Verfahren nach dem vorangehenden Anspruch, wobei der Einschaltzeitpunkt und/oder der Ausschaltzeitpunkt abhängig von einem zeitlichen Verlauf des Messsignals (111, 211) gewählt wird.

3. Verfahren nach einem der vorangehenden Ansprüche, wobei der Einschaltzeitpunkt und/oder der Ausschaltzeitpunkt abhängig ist von der Höhe des Messsignals (111, 211).

4. Verfahren nach einem der vorangehenden Ansprüche, wobei das Störsignal ein systematisches Störsignal ist.

5. Verfahren nach einem der vorangehenden Ansprüche, wobei das Messsignal (111, 211) und/oder das Störsignal (290b) einen zeitlich zyklischen Verlauf aufweist.

6. Verfahren nach einem der vorangehenden Ansprüche, wobei das Messsignal ein analoges Messsignal (111, 211) ist.

7. Verfahren nach einem der vorangehenden Ansprüche, wobei dem Messsignal (111, 211) zumindest ein weiteres Störsignal (286b, 288b) von einer weiteren Störquelle überlagert ist, das mit dem zeitlichen Verlauf des Messsignals (111, 211) korreliert ist und innerhalb eines weiteren Zeitintervalls auftritt, das Verfahren ferner aufweisend
• Aktivieren einer weiteren Filterschaltung (126) zu einem weiteren Einschaltzeitpunkt, welcher vor dem Beginn des weiteren Zeitintervalls liegt oder mit dem Beginn des weiteren Zeitintervalls zusammenfällt,
• Reduzieren der Störung (286b, 288b) des Messsignals (111, 211) mittels der aktivierten weiteren Filterschaltung, und
• Deaktivieren der weiteren Filterschaltung (126) zu einem weiteren Ausschaltzeitpunkt, welcher mit dem Ende des weiteren Zeitintervalls zusammenfällt oder nach dem Ende des weiteren Zeitintervalls liegt.

8. Verfahren nach einem der vorangehenden Ansprüche, wobei der Sensor ein Drucksensor (110) ist, welcher insbesondere zum Messen eines Zylinderdrucks eines Motors eines Kraftfahrzeugs verwendet wird.

9. Verfahren nach einem der vorangehenden Ansprüche, wobei die Störquelle ein Zündsystem (170) für einen Zylinder (160) eines Motors des Kraftfahrzeugs ist.

10. Verfahren nach einem der vorangehenden Ansprüche, wobei die Störquelle ein Ladungswechselventil (161, 162) ist, welches durch eine abrupte Bewegungsänderung einen Messvorgang des Sensors (110) beeinflusst.

11. Vorrichtung zum selektiven Filtern eines Messsignals (111, 211) eines Sensors (110) eines Kraftfahrzeugs, wobei dem Messsignal (111, 211) ein Störsignal (290b) von einer Störquelle überlagert ist, das mit einem zeitlichen Verlauf des Messsignals (111, 211) korreliert ist und das lediglich innerhalb eines begrenzten Zeitintervalls auftritt, die Vorrichtung (120) aufweisend
• eine Filterschaltung (127) zum Reduzieren der Störung (290b) des Messsignals (111, 211), und
• eine Filterauswahleinrichtung (125),
zum Aktivieren der Filterschaltung (127) zu einem Einschaltzeitpunkt, welcher vor dem Beginn des begrenzten Zeitintervalls liegt oder mit dem Beginn des begrenzten Zeitintervalls zusammenfällt, und
zum Deaktivieren der Filterschaltung (127) zu einem Ausschaltzeitpunkt, welcher mit dem Ende des begrenzten Zeitintervalls zusammenfällt oder nach dem Ende des begrenzten Zeitintervalls liegt.

12. Vorrichtung nach Anspruch 11, zusätzlich aufweisend
• eine weitere Filterschaltung (126) zum Reduzieren einer weiteren Störung (286b, 288b) des Messsignals (111, 211), wobei die weitere Störung (286b, 288b) von einer weiteren Störquelle verursacht ist, mit dem zeitlichen Verlauf des Messsignals (111, 211) korreliert ist und innerhalb eines weiteren Zeitintervalls auftritt, und
• eine weitere Filterauswahleinrichtung, zum Aktivieren der weiteren Filterschaltung (126) zu einem weiteren Einschaltzeitpunkt, welcher vor dem Beginn des weiteren Zeitintervalls liegt oder mit dem Beginn des weiteren Zeitintervalls zusammenfällt, und zum Deaktivieren der weiteren Filterschaltung (126) zu einem weiteren Ausschaltzeitpunkt, welcher mit dem Ende des weiteren Zeitintervalls zusammenfällt oder nach dem Ende des weiteren Zeitintervalls liegt.

13. Sensorsystem für ein Kraftfahrzeug, insbesondere für den Motor eines Kraftfahrzeugs, das Sensorsystem (100) aufweisend
• einen Sensor (110) zum Erfassen einer Messgröße, und
• eine Vorrichtung (120) nach einem der beiden vorangehenden Ansprüche, welche Vorrichtung (120) dem Sensor (110) nachgeschaltet ist.

14. Sensorsystem nach dem vorangehenden Anspruch, wobei der Sensor (110) und die Vorrichtung (120) eine bauliche Einheit bilden.

15. Computerprogramm zum selektiven Filtern eines Messsignals (111, 211) eines Sensors (110) eines Kraftfahrzeugs, wobei dem Messsignal (111, 211) ein Störsignal (290b) von einer Störquelle überlagert ist, das mit einem zeitlichen Verlauf des Messsignals (111, 211) korreliert ist und das lediglich innerhalb eines begrenzten Zeitintervalls auftritt, wobei das Computerprogramm, wenn es von einem Prozessor ausgeführt wird, zum Durchführen des Verfahrens nach einem der Ansprüche 1 bis 10 eingerichtet ist.

## Geänderte Patentansprüche

### Geänderte Patentansprüche gemäss Regel 137(2) EPÜ.

**1.** Verfahren zum selektiven Filtern eines Messsignals (111, 211) eines Sensors (110) eines Kraftfahrzeugs, wobei dem Messsignal (111, 211) ein Störsignal (290b) von einer Störquelle überlagert ist, das mit einem zeitlichen Verlauf des Messsignals (111, 211) korreliert ist und das lediglich innerhalb eines begrenzten Zeitintervalls auftritt, das Verfahren aufweisend
• Aktivieren einer Filterschaltung (127) zu einem Einschaltzeitpunkt, welcher vor dem Beginn des begrenzten Zeitintervalls liegt oder mit dem Beginn des begrenzten Zeitintervalls zusammenfällt,
• Reduzieren der Störung (290b) des Messsignals (111, 211) mittels der aktivierten Filterschaltung, und
• Deaktivieren der Filterschaltung (127) zu einem Ausschaltzeitpunkt, welcher mit dem Ende des begrenzten Zeitintervalls zusammenfällt oder nach dem Ende des begrenzten Zeitintervalls liegt,
wobei
der Einschaltzeitpunkt und/oder der Ausschaltzeitpunkt abhängig von einem zeitlichen Verlauf des Messsignals (111, 211) gewählt wird und
wobei
der Einschaltzeitpunkt und/oder der Ausschaltzeitpunkt abhängig ist von der Höhe des Messsignals (111, 211).

**2.** Verfahren nach dem vorangehenden Anspruch, wobei das Störsignal ein systematisches Störsignal ist.

**3.** Verfahren nach einem der vorangehenden Ansprüche, wobei das Messsignal (111, 211) und/oder das Störsignal (290b) einen zeitlich zyklischen Verlauf aufweist.

**4.** Verfahren nach einem der vorangehenden Ansprüche, wobei das Messsignal ein analoges Messsignal (111, 211) ist.

**5.** Verfahren nach einem der vorangehenden Ansprüche, wobei dem Messsignal (111, 211) zumindest ein weiteres Störsignal (286b, 288b) von einer weiteren Störquelle überlagert ist, das mit dem zeitlichen Verlauf des Messsignals (111, 211) korreliert ist und innerhalb eines weiteren Zeitintervalls auftritt, das Verfahren ferner aufweisend
• Aktivieren einer weiteren Filterschaltung (126) zu einem weiteren Einschaltzeitpunkt, welcher vor dem Beginn des weiteren Zeitintervalls liegt oder mit dem Beginn des weiteren Zeitintervalls zusammenfällt,
• Reduzieren der Störung (286b, 288b) des Messsignals (111, 211) mittels der aktivierten weiteren Filterschaltung, und
• Deaktivieren der weiteren Filterschaltung (126) zu einem weiteren Ausschaltzeitpunkt, welcher mit dem Ende des weiteren Zeitintervalls zusammenfällt oder nach dem Ende des weiteren Zeitintervalls liegt.

**6.** Verfahren nach einem der vorangehenden Ansprüche, wobei der Sensor ein Drucksensor (110) ist, welcher insbesondere zum Messen eines Zylinderdrucks eines Motors eines Kraftfahrzeugs verwendet wird.

**7.** Verfahren nach einem der vorangehenden Ansprüche, wobei die Störquelle ein Zündsystem (170) für einen Zylinder (160) eines Motors des Kraftfahrzeugs ist.

**8.** Verfahren nach einem der vorangehenden Ansprüche, wobei die Störquelle ein Ladungswechselventil (161, 162) ist, welches durch eine abrupte Bewegungsänderung einen Messvorgang des Sensors (110) beeinflusst.

**9.** Vorrichtung zum selektiven Filtern eines Messsignals (111, 211) eines Sensors (110) eines Kraftfahrzeugs, wobei dem Messsignal (111, 211) ein Störsignal (290b) von einer Störquelle überlagert ist, das mit einem zeitlichen Verlauf des Messsignals (111, 211) korreliert ist und das lediglich innerhalb eines begrenzten Zeitintervalls auftritt, die Vorrichtung (120) aufweisend
• eine Filterschaltung (127) zum Reduzieren der Störung (290b) des Messsignals (111, 211), und
• eine Filterauswahleinrichtung (125),
zum Aktivieren der Filterschaltung (127) zu einem Einschaltzeitpunkt, welcher vor dem Beginn des begrenzten Zeitintervalls liegt oder mit dem Beginn des begrenzten Zeitintervalls zusammenfällt, und
zum Deaktivieren der Filterschaltung (127) zu einem Ausschaltzeitpunkt, welcher mit dem Ende des begrenzten Zeitintervalls zusammenfällt oder nach dem Ende des begrenzten Zeitintervalls liegt,
wobei
der Einschaltzeitpunkt und/oder der Ausschaltzeitpunkt abhängig von einem zeitlichen Verlauf des Messsignals (111, 211) ist und
wobei
der Einschaltzeitpunkt und/oder der Ausschaltzeitpunkt abhängig ist von der Höhe des Messsignals (111, 211).

**10.** Vorrichtung nach Anspruch 9, zusätzlich aufweisend
• eine weitere Filterschaltung (126) zum Reduzieren einer weiteren Störung (286b, 288b) des Messsignals (111, 211), wobei die weitere Störung (286b, 288b) von einer weiteren Störquelle verursacht ist, mit dem zeitlichen Verlauf des Messsignals (111, 211) korreliert ist und innerhalb eines weiteren Zeitintervalls auftritt, und
• eine weitere Filterauswahleinrichtung, zum Aktivieren der weiteren Filterschaltung (126) zu einem weiteren Einschaltzeitpunkt, welcher vor dem Beginn des weiteren Zeitintervalls liegt oder mit dem Beginn des weiteren Zeitintervalls zusammenfällt, und zum Deaktivieren der weiteren Filterschaltung (126) zu einem weiteren Ausschaltzeitpunkt, welcher mit dem Ende des weiteren Zeitintervalls zusammenfällt oder nach dem Ende des weiteren Zeitintervalls liegt.

**11.** Sensorsystem für ein Kraftfahrzeug, insbesondere für den Motor eines Kraftfahrzeugs, das Sensorsystem (100) aufweisend
• einen Sensor (110) zum Erfassen einer Messgröße, und
• eine Vorrichtung (120) nach einem der beiden vorangehenden Ansprüche, welche Vorrichtung (120) dem Sensor (110) nachgeschaltet ist.

**12.** Sensorsystem nach dem vorangehenden Anspruch, wobei der Sensor (110) und die Vorrichtung (120) eine bauliche Einheit bilden.

**13.** Computerprogramm zum selektiven Filtern eines Messsignals (111, 211) eines Sensors (110) eines Kraftfahrzeugs, wobei dem Messsignal (111, 211) ein Störsignal (290b) von einer Störquelle überlagert ist, das mit einem zeitlichen Verlauf des Messsignals (111, 211) korreliert ist und das lediglich innerhalb eines begrenzten Zeitintervalls auftritt, wobei das Computerprogramm, wenn es von einem Prozessor ausgeführt wird, zum Durchführen des Verfahrens nach einem der Ansprüche 1 bis 8 eingerichtet ist.
